(19) Europäisches Patentamt / European Patent Office / Office européen des brevets

(11) **EP 1 595 111 B1**

(12) **EUROPÄISCHE PATENTSCHRIFT**

(45) Veröffentlichungstag und Bekanntmachung des Hinweises auf die Patenterteilung:
**11.11.2009 Patentblatt 2009/46**

(51) Int Cl.:
*G01C 19/72* (2006.01)    *G02F 1/01* (2006.01)

(21) Anmeldenummer: **04712523.2**

(86) Internationale Anmeldenummer:
**PCT/EP2004/001641**

(22) Anmeldetag: **19.02.2004**

(87) Internationale Veröffentlichungsnummer:
**WO 2004/074775 (02.09.2004 Gazette 2004/36)**

(54) **DIGITALER PHASENMODULATOR FÜR EINE FASEROPTISCHE EINRICHTUNG**

DIGITAL PHASE MODULATOR FOR A FIBER-OPTIC DEVICE

MODULATEUR DE PHASE NUMERIQUE POUR UN DISPOSITIF A FIBRES OPTIQUES

(84) Benannte Vertragsstaaten:
**CZ DE FR GB**

(30) Priorität: **21.02.2003 DE 10307525**

(43) Veröffentlichungstag der Anmeldung:
**16.11.2005 Patentblatt 2005/46**

(73) Patentinhaber: **Northrop Grumman LITEF GmbH
79115 Freiburg (DE)**

(72) Erfinder:
• **VOIGT, Sven
79111 Freiburg (DE)**
• **SPAHLINGER, Günter
70188 Stuttgart (DE)**
• **NEWZELLA, Alfons
82239 Alling (DE)**

(74) Vertreter: **Müller, Frithjof E. et al
Müller Hoffmann & Partner
Patentanwälte
Innere Wiener Strasse 17
81667 München (DE)**

(56) Entgegenhaltungen:
**DE-C- 19 629 260    DE-C- 19 753 427**

**Beschreibung**

Die Erfindung betrifft ein Verfahren zur Erhöhung der Auflösung eines digitalen Phasenmodulators für eine faseroptische Signalübertragungs- oder Messeinrichtung, der mit einer vorgegebenen Gesamtzahl von parallel und beidseitig zu einer Lichtführungsstrecke in oder auf einem optischen Substrat angeordneten Elektroden unterschiedlicher Längen ausgestattet ist, wobei die Elektroden zu beiden Seiten der Lichtführungsstrecke mit vorzugswseise gleichem Steuerpotenzial beaufschlagt werden, derart, dass durch wechselnde Ansteuerauswahl von Elektrodenkombinationen innerhalb eines vorgegebenen Wertebereichs eine Vielzahl von Phasenwerten eingestellt werden.

Die Elektroden des Phasenmodulators werden zur Ansteuerung vorzugsweise mit gleichen Potenzialen beaufschlagt, welche, je nach Lage der Elektroden zur Lichtführungsstrecke, eine positive oder negative Verschiebung der Lichtphase am Ausgang des Modulators bewirken. Im Folgenden werden die Elektroden kurz auch als "positive" bzw. "negative" Elektroden bezeichnet.

Die Erfindung bezieht sich außerdem auf einen digitalen Phasenmodulator mit erhöhter Auflösung gemäß dem Oberbegriff des Patentanspruchs 8.

Aus der Patentschrift DE 197 53 427 Cl sind ein Verfahren sowie eine Einrichtung zur Erhöhung der Genauigkeit eines digitalen aus binär gewichteten Flächenelektroden aufgebauten Phasenmodulators für eine faseroptische Signalübertragungs- oder Messeinrichtung, vorzugsweise ein faseroptisches Interferometer, bekannt, bei dem ein niedersignifikanter Anteil eines binären Ansteuersignals über einen Digital-/Analog-Wandler mit nachgeschaltetem Treiber einer bestimmten separat vorhandenen Analogelektrode eines ansonsten digitalen Phasenmodulators zugeführt wird. Außerdem ist dort vorgesehen, den Elektroden des Phasenmodulators individuell zuordenbare Korrekturwerte in einer Speichertabelle abzulegen, so dass sich insbesondere herstellungsbedingte Ungenauigkeiten der Phasenmodulationswerte korrigieren lassen. Die in der genannten Druckschrift beschriebene Lötung ermöglicht zwar eine Erhöhung der Auflösung, jedoch ist der technische Aufwand vergleichsweise hoch, einerseits auf Grund der Verwendung von Korrekturtabellen, andererseits aber auch und insbesondere durch den notwendigen Einsatz eines D/A-Wandters mit Treiber, dessen analoge Ausgangswerte außerdem nur begrenzt temperaturstabil sind. Insbesondere bei der Verwendung von solchen Phasenmodulatoren in faseroptischen Gyroskopen (FOGs) mit geschlossener Regelschleife, aber auch für andere faseroptische Signalübertragungs- und Messeinrichtungen, ist eine höhere als bisher technologisch beherrschbare Auflösung wünschenswert ohne beispielsweise zu wesentlich größeren Substratgrößen übergehen zu müssen.

Daraus ergibt sich die der Erfindung zugrundeliegende Aufgabe, ein Verfahren und eine Einrichtung zur Erhöhung der Auflösung eines digitalen Phasenmodulators für eine faseroptische Signalübertragungs- oder Messeinrichtung bereitzustellen, bei dem für eine deutlich erhöhte Auflösung keine Digital-/Analog-Wandlung benötigt wird.

Die Erfindung ist bei einem Verfahren der eingangs genannten Gattung mit dem Ziel einer Erhöhung der Auflösung eines digitalen Phasenmodulators für eine faseroptische Signalübertragungs- oder Messeinrichtung **dadurch gekennzeichnet, dass** die Gesamtzahl m von Elektroden des Phasenmodulators in zwei Gruppen aufgeteilt wird, wobei

- aus einer ersten Gruppe n von Elektroden einen Grobmodulator mit binär und in ihrem Beitrag zur Lichtphasenverschiebung höhersignifikant gewichteten Elektroden mit einem Längenverhältnis von $b_{n+1} : b_n = 2$ gebildet wird, und

- aus einer zweiten Gruppe von $n_0$ nicht-binär und in ihrem Beitrag zur Lichtphasenverschiebung niedriger signifikant gewichteter Elektroden ein Feinmodulator gebildet wird, wobei auf der einen Seite der längsten Elektrode (E11) des Grobmodulators mindestens eine Elektrode dieses Feinmodulators plaziert wird, und wobei

- die Längen und damit Gewichtungen auf die Lichtphasenverschiebung der auf unterschiedlichen Seiten des Feinmodulators angeordneten Elektroden einerseits größer gewählt werden als die Auflösung (Basisschrittweite) des Grobmodulators und andererseits die kleinsten Phasenmodulationsschritte durch gleichzeitige Ansteuerung von positiven und negativen Elektroden des Feinmodulators bzw. des Feinmodulators und des Grobmodulators erzeugt werden.

Vorzugsweise, jedoch nicht zwingend, ist die Anzahl $n_0$ der Elektroden des Feinmodulators geradzahlig, wobei gilt $n_0 < n$.

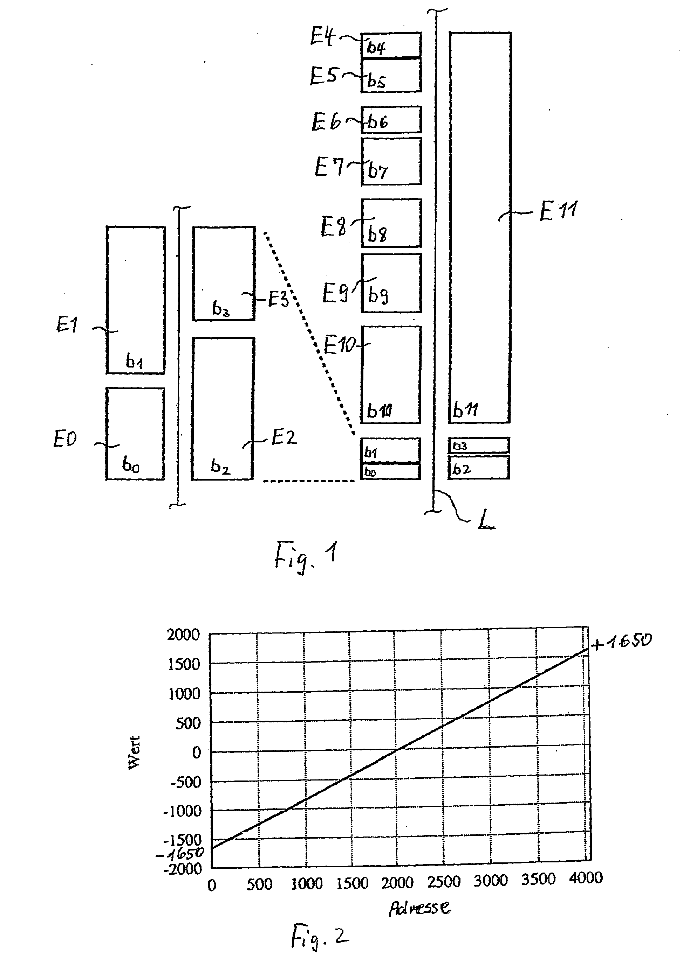

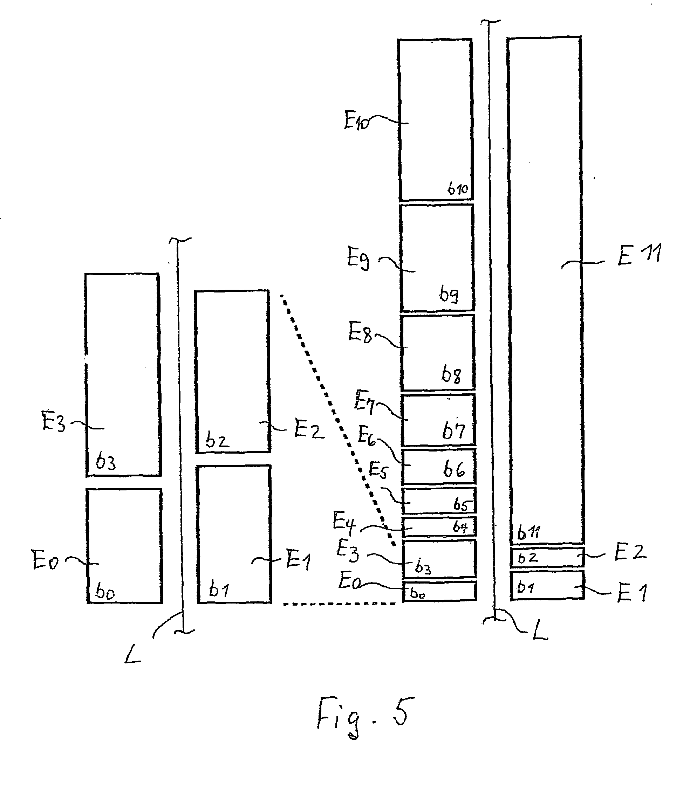

Es ist nicht zwingend erforderlich, dass die Elektroden des Modulators sich genau räumlich gegenüberstehen, allerdings wird diese Anordnung nicht nur aus Gründen der besseren Anschauung die Regel sein. Der Feinmodulator kann auch eine unsymmetrische Anzahl von Elektroden aufweisen, d. h. die Elektrodenzahl des Feinmodulators ist dann ungleich auf die beiden Seiten der Lichtführungsstrecke verteilt, wozu weiter unten Beispiele gegeben werden. Wichtig ist jedoch, dass auf der Seite der längsten Elektrode des Grobmodulators mindestens eine Elektrode des Feinmodulators plaziert ist, wie dies bei den nachfolgend erläuterten Ausführungsbeispielen der Fig. 1 bzw. 5 der Fall ist.

Ein digitaler Phasenmodulator für faseroptische Signalübertragungs- oder Messeinrichtungen, der eine Gesamtanzahl m von parallel und beidseitig zu einer Lichtführungsstrecke in oder auf einem optischen Substrat angeordneter positiver bzw. negativer Elektroden unterschiedlicher Längen aufweist, wobei die Elektroden zu beiden Seiten der Lichtführungsstrecke mit vorzugsweise gleichen, jedoch durch entgegengesetzte elektrische Feldstärken bewirkten Steuerpotenzialen beaufschlagbar sind, derart, dass durch wechselnde Ansteuerauswahl von Elektrodenkombinationen innerhalb eines vorgegebenen Wertebereichs eine Vielzahl von Phasenwerten eingestellt werden kann, ist erfindungsgemäß gekennzeichnet durch

- eine erste Gruppe von Elektroden, die einen Grobmodulator mit n binär und höher signifikant gewichteten Elektroden mit einem Längenverhältnis $b_{n+1} : b_n$ von etwa 2 bildet, mit n < m; m = Gesamtanzahl aller Elektroden, wobei jedoch die Länge der längsten Elektrode der Längensumme aller übrigen Elekroden des Gesamtmodulators mit einem Gewichtungswert von

$$b_{m\text{-}1} = \sum_{i=0}^{m-2} b_i$$

entspricht:

- eine zweite Gruppe von $n_0$ nicht-binär und in ihrem Beitrag zur Lichtphasenverschiebung niedriger signifikant gewichteter Elektroden, die einen Feinmodulator bildet, wobei gilt $n + n_0 = m$; $n_0 < n$; und durch

- eine relative Länge und Anordnung der zweiten Gruppe von $n_0$ Elektroden längs zur Lichtführungsstrecke derart, dass sich einerseits bei keiner möglichen Elektrodenkombination Phasenwerte-Auslöschung ergibt und andererseits das Verhältnis der kleinsten zur größten Elektrodenlänge für eine durch die Gesamtanzahl m an Elektroden gegebene Auflösung von annähernd $1:2^{-m}$ möglichst groß ist.

Ein erfindungsgemäßer Phasenmodulator wird in der Regel als eine Baueinheit innerhalb oder auf einem multifunktionalen integrierten optischen Chip (MIOC) realisiert, auf oder in dessen Substrat - beispielsweise aus Lithium-Niobat ($LiNbO_3$) - sich polarisationserhaltende Lichtführungsstrecken realisieren lassen. Im Falle eines FOGs enthält ein solcher MIOC außer einem Strahlteiler beispielsweise noch einen Polarisator. Der Phasenmodulator selbst, d. h. seine unterschiedlich langen positiven bzw. negativen Elektroden, beeinflussen die Phasen der beiden gegenläufigen Lichtwege nach einer Verzweigung. Da ein MIOC mit integriertem digitalen Phasenmodulator prinzipiell bekannt ist, wird auf Einzelheiten, soweit sie für die Erfindung ohne Bedeutung sind, nicht weiter eingegangen.

Es wäre sicher möglich, eine Erhöhung der Genauigkeit und Auflösung eines digitalen Phasenmodulators der genannten Art durch Vergrößerung der Gesamtlänge des MIOC bei reiner Binärgewichtung der Elektroden zu erreichen, wobei dann für die LSB-Elektrode eine Mindestlänge von etwa 40 $\mu$m angesetzt werden müsste, da kleinere Längen zu großen Ungenauigkeiten aufgrund von Feldverzerrungen und Herstellungstoleranzen führen. Für einen 9-Bit-Wandler ergibt sich dann eine Gesamtelektrodenlänge von etwa 10 mm. Wollte man unter gleicher Vorgabe für einen bestimmten Modulations-Spannungsbereich - z. B. den $U_\pi$-Bereich bei einem FOG - und der genannten LSB-Mindestlänge der kleinsten Elektrode einen 12-Bit-Wandler realisieren, so ergäbe sich eine Länge der längsten Elektrode von ca. 80 mm, was aus verschiedenen Gründen unrealistisch ist.

Die Erfindung geht einen anderen Weg: Es wird eine kombinierte Modulatorkonfiguration ohne die Notwendigkeit einer Korrekturtabelle und ohne Verlängerung des Gesamtaufbaus vorgeschlagen, bei der binäre und nicht-binäre Elektrodengruppen kombiniert werden.

Mit der erfindungsgemäßen Modulatorkonfiguration lassen sich folgende Forderungen erfüllen:

(1) Für das Längenverhältnis bzw. die Gewichtungen der Elektroden der ersten Gruppe gilt: $b_{n+1} : b_n = 2$ für n > no.

(2) Die ausgangsseitige Schrittweite ist bis auf noch näher erläuterte Ränder des Ausgangswertebereichs gleich |1| (= Basisschrittweite).

(3) Die kleinsten verwendeten Elektroden haben bei einer Auflösung von etwa $1:2^{-11,5}$ zur Gesamtlänge des Phasenmodulators ein Verhältnis von $<1:2^{-9}$.

(4) Alle Elektroden weisen unterschiedliche Längen auf, so dass keine Feldauslöschungen auftreten.

Die Erfindung nutzt als Kerngedanken die Idee, dass zur Erzielung einer feineren Auflösung als durch die kürzeste Elektrode gegeben, Wertedifferenzen zwischen sich in ihrem Wirkungsbereich überlappenden positiven und negativen Elektroden verwendet werden.

Die Verwendung einer hybriden Längenaufteilung der Elektroden in mehrere Gruppen, nämlich binär und nicht-binär, liefert folgende Vorteile:

- Es lässt sich eine Auflösung von > 3300:1 bei einem Längenverhältnis "Modulatorlänge zu kürzester Elektrode" von < 235:1 erreichen.

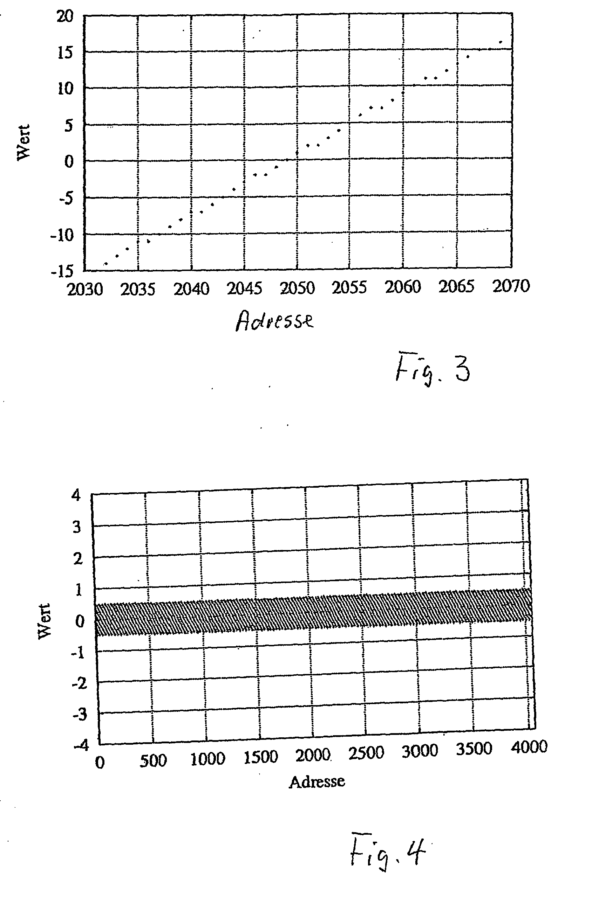

- Der Restfehler wird minimiert (vgl. Fig. 4) bei gleichmäßiger Verteilung über einen vorgegebenen gesamten Adressraum.

- Ein erfindungsgemäßer Modulator kann mit Korrekturtabelle in bekannter Weise betrieben werden. Wichtig ist jedoch, dass ein Betrieb auch ohne Korrekturtabelle mit nur leicht verringerter Genauigkeit möglich ist. Dies reduziert Probleme bei sicherheitskritischen Anwendungen.

Die Gesamtauflösung des Phasenmodulators ist deutlich besser als das Verhältnis der Gesamtlänge zur Länge der kürzesten Elektrode. Die zur Zeit erreichbare effektive Auflösung mit 12 Elektroden (siehe nachfolgendes Beispiel) ist > 11,68 Bit (=$\log_2(3300)$).

Die Erfindung und weitere vorteilhafte Einzelheiten werden nachfolgend unter Bezug auf die Zeichnungen in beispielsweise Ausführungsform näher erläutert. Es zeigen:

Fig. 1     das Schema einer ersten Ausführungsvariante einer Aufteilung und Anordnung der Elektroden eines erfindungsgemäßen Phasenmodulators mit Hybrid-Konfiguration;

Fig. 2     ein tabellarisch geordnetes Beispiel für die Ausgangskennlinie des erfindungsgemäßen Phasenmodulators nach Fig. 1;

Fig. 3     eine vergrößerte Darstellung zur Verdeutlichung der Schrittweite als Ausschnitt aus der Tabelle nach Fig. 1 um den Nullpunkt;

Fig. 4     ein Diagramm zur Verdeutlichung maximaler Abweichungen von der idealen Ausgangskennlinie für den digitalen Phasenmodulator nach Fig. 1;

Fig. 5     das Schema einer zweiten, zur Zeit als beste Ausführung realisierten Aufteilung und Anordnung der Elektroden eines erfindungsgemäßen 12-Bit Phasenmodulators in Hybrid-Konfiguration;

Fig. 6     eine Ausschnittdarstellung der Ausgangskennlinie für den hybriden Phasenmodulator nach Fig. 5 bei einer Wertezuordnung gemäß einer optimierten Wertetabelle (Tabelle 2);

Fig. 7     den Blockschaltbildaufbau einer prinzipiellen Anordnung zur elektronischen Korrektur bzw. Umrechnung binärer Werte in die einzelnen Elektroden des erfindungsgemäßen Phasenmodulators beaufschlagende nicht-binäre Werte;

Fig. 8     eine der Fig. 7 entsprechende Blockschaltbildanordnung für den Aufbau einer Korrekturtabelle mit externer Korrekturmöglichkeit; und

Fig. 9     einen abgewandelten Blockschaltbildaufbau der Schaltungsanordnung nach Fig. 7, bei der zwischen mehreren in einem Speicher abgelegten Korrekturtabellen wahlweise umgeschaltet werden kann.

Fig. 1 veranschaulicht in schematischer vergrößerter Darstellung ein erstes Ausführungsbeispiel für einen digitalen Phasenmodulator mit erhöhter Auflösung gemäß der Erfindung. Dieser Phasenmodulator umfasst insgesamt zwölf Elektroden unterschiedlicher Länge und Gewichtung, die mit E0, E1, ... E10, E11 bezeichnet sind. Um ein wesentliches Merkmal der Erfindung, nämlich die nicht-binäre Auslegung der niedrig-signifikanten Elektroden E0 bis E3 zu verdeutlichen, sind letztere in Fig. 1 nach links gesetzt stark vergrößert gezeichnet. Wie dargestellt verkörpern oder besetzen die links von einem Lichtwellenleiter L angeordneten Elektroden E0, E1 sowie E4 bis E10 Wertepositionen $b_0$, $b_1$ bzw. $b_4$ bis $b_{10}$, während die rechtsseitig des Wellenleiters L angeordneten Elektroden E2, E3 sowie E11 Wertepositionen $b_2$, $b_3$ und $b_{11}$ besetzen.

In der Ausgestaltung der Erfindung gemäß Fig. 1 ergibt sich also eine sogenannte "8+4-Konfiguration", bei der die oberen acht Elektroden E4 bis E11 binär gewichtet sind und eine als "Grobmodulator" bezeichnete erste Gruppe von Elektroden bilden, während mit den unteren Elektroden E0 bis E3 die erfindungsgemäß angestrebte erhöhte Auflösung bei geeigneter Zusammenschaltung, insbesondere durch Feld-Differenzbildung, realisiert wird. Diese untere zweite Gruppe von Elektroden E0 bis E3 bildet einen "Feinmodulator". Soweit ein im Bedarfsfall als Korrekturtabelle verwendeter LOOK-UP-RAM ausfällt, lässt sich der Modulator nach wie vor mit einer reduzierten 8-Bit-Auflösung weiter betreiben. Für die Dimensionierung der Elektroden gemäß dem erfindungsgemäßen ersten Ausführungsbeispiel nach Fig. 1 gelten folgende Vorraussetzungen und Überlegungen:

(1) Das Verhältnis $b_{n+1} : b_n$ der Elektrodengröße bzw. -längen für die erste binär gewichtete Elektrodengruppe E4 bis E11 sollte für $n \in [4:10]$ (etwa) gleich "2" sein.

(2) Die Auflösung sollte möglichst gleichmäßig fein sein, d. h. die ausgangsseitige Schrittweite etwa $|1|$ (=Basisschrittweite) betragen.

(3) Die kleinsten verwendeten Elektroden sollten bei gegebener Auflösung aus technologischen Gründen möglichst groß sein. Konkret und für den Phasenmodulator nach Fig. 1 sollte ein Verhältnis von etwa $1:2^9$ zwischen kleinster und größter Elektrode nicht unterschritten werden, wie bei einem herkömmlichen 9-Bit-Phasenmodulator.

(4) Alle vier Elektroden im dargestellten Beispiel der zweiten Elektrodengruppe des "Feinmodulators" sollen unterschiedliche Größe haben, da sonst Auslöschungen auftreten können.

Aus Punkt (3) folgt, dass erfindungsgemäß die kleinstmögliche Auflösung nicht durch die Länge der kleinsten Elektrode gegeben ist, sondern durch die Differenz der sich in ihrem Wirkungsbereich überlappenden Elektroden. Setzt man zunächst die Elektrode E0 an der Werteposition $b_0$ als kleinste Elektrode an und führt noch die Beziehungen

$$u = b_2 - b_0$$
$$c = b_0$$
$$1 = b_3 + b_2 \approx b_1 - b_0 \qquad (1)$$

ein, wobei "1" die Gesamtlänge des Feinmodulators bezeichnet, so folgt aus der Forderung nach Punkt 1:

$$u = 1 \qquad (2)$$

Da der Wert c sich auf die kleinste Elektrode in Nullposition ($b_0$) bezieht, bezieht sich $b_1$ auf die größte Elektrode des Feinmodulators (siehe Fig. 1), d. h. es gilt:

$$1 < c < b_3, b_2 < b_1 \qquad (3)$$

Setzt man, um die Voraussetzungen (1) und (3) zu erfüllen, für 1 = 16, so führt dies zu dem Ansatz:

$$c = b_0 = 7$$
$$b_2 = c + u = 8 \qquad (5)$$

Um die Voraussetzung (4) zu erfüllen, sei

$$b_3 = b_2 + 1 = 9 \tag{6}$$

Dies führt zu

$$1 = b_1 + b_0 = 17 \tag{7}$$

und wegen G1. (1) zu:

$$b_1 = 1 - c = 10 \tag{8}$$

Mit diesen Gewichtungen lassen sich die Werte bzw. Zahlen

$$1, 2, \sqcup, \sqcup, \sqcup, \sqcup, 7, 8, 9, 10, \sqcup, \sqcup, \sqcup, \sqcup, 17 \tag{9}$$

mit beiden Vorzeichen sowie die Null darstellen.

Um die Lücke zwischen "2" und "7" zu schließen, muss für die kleinste Elektrode E4 (Position $b_4$) des Grobmodulators gelten:

$$b_4 + 10 = 13 \tag{10}$$

Damit lassen sich die Werte bis "15" darstellen. Für den Wert "16" ist analog zu fordern:

$$b_5 - x = 16, \; x \in \{7, 8, 9, 10\} \tag{11}$$

Wählt man x = 10, so führt dies dazu, dass $b_5 = 2\,b_4$ gilt. Da die Werte der übrigen Elektroden des Grobmodulators ebenfalls Zweier-Potenzen bilden, ergibt sich für den Grobmodulator der gewünschte "klassische" 8-Bit-Aufbau.

Die daraus resultierende Elektrodenaufteilung und Gewichtung der Elektroden E0 bis E11 an den Positionen $b_0$ bis $b_{11}$ ergibt sich aus der nachfolgenden Tabelle 1 als Beispiel für eine konstruierte Elektrodenlängenfolge mit einem Ausgangs-Dynamikbereich von > 1 : $2^{11,5}$.

Tabelle 1

| Position | Wert |
|----------|------|
| $b_0$ | 7 |
| $b_1$ | -8 |
| $b_2$ | -9 |
| $b_3$ | 10 |
| $b_4$ | 13 |
| $b_5$ | 26 |
| $b_6$ | 52 |
| $b_7$ | 104 |
| $b_8$ | 208 |

(fortgesetzt)

| Position | Wert |
|----------|------|
| $b_9$ | 416 |
| $b_{10}$ | 832 |
| $b_{11}$ | -1652 |

Die Länge bzw. Gewichtung der Elektrode E11 mit b11 = -1652 entspricht genau der Summe der Gewichtungen der Elektroden E4 bis E10 auf der gegenüberliegenden Seite des Wellenleiters L mit den Positionen $b_4$ bis $b_{10}$ + |1|.

Das in Fig. 2 dargestellte Beispiel der Ausgangskennlinie für einen digitalen Phasenmodulator nach Fig. 1 veranschaulicht einen Wertebereich von -1650 bis +1650 mit entsprechend zugeordneten Adressen aus einer Ansteuerlogik. Der Phasengang ist offensichtlich vollkommen linear.

Die vergrößerte Ausschnittdarstellung nach Fig. 3 der Kennlinie nach Fig. 2 um den Nullpunkt lässt deutlich erkennen, dass die Schrittweite eines Werts von |1| wesentlich kleiner ist als die Länge bzw. Gewichtung der kürzesten Elektrode von $b_0$ = 7.

Der Plot der Fig. 4 zeigt für die Elektrodenkonfiguration nach Fig. 1 den Bereich der Abweichungen vom linearen Verhalten, d. h. die verbleibenden Abweichungen von einer idealen Kennlinie.

Die bisher dargestellte Herleitung für eine hybride Elektrodenstruktur gemäß der Erfindung bezieht sich auf ein erstes erprobtes Beispiel für eine mögliche Bestimmung und Auslegung der Elektrodenlängen. Entscheidend sind hierfür die zuvor dargestellten Voraussetzungen und Bedingungen an den Gesamtmodulator und die Forderung, dass innerhalb des verwendeten Adressraums (z.B. 11,7 Bit) keine Lücken bei der Zahlenkombination auftreten.

Allgemeiner lassen sich nach diesem Verfahren grundsätzlich beliebige Elektrodenkonfigurationen zusammenstellen, je nachdem, welche jeweiligen Randbedingungen erfüllt werden müssen. Die entscheidenden Randbedingungen sind hierbei:

- die maximal angestrebte und mögliche Zahl an Ausgangswerten im Basisschrittweiten-Abstand;
- das mindestens mögliche Längenverhältnis der längsten zur kürzesten Elektrode, das in der Praxis durch die maximal mögliche Baulänge bestimmt wird;
- die Zahl der möglichen Elektroden, die ihrerseits die Kombinationsmöglichkeiten und damit die maximale Dynamik auf $2^n$ begrenzt;
- die Genauigkeit des verfügbaren Herstellungsprozesses bzw. in anderen Worten die Feinabstimmung der Längenunterschiede der Elektroden;
- das Notbetriebsverhalten des Phasenmodulators ohne den Einsatz bzw. bei Ausfall der Korrekturtabelle(n).

Je nachdem, welche der Forderungen bzw. Randbedingungen am wichtigsten ist, kann es zweckmäßig sein, zum Beispiel die Elektroden des Feinmodulators mit denen des Grobmodulators überlappen zu lassen, wofür unter Bezug auf die vorstehend beschriebene Fig. 5 ein Beispiel gegeben wird.

Es lassen sich Konstellationen bzw. Elektrodenkonfigurationen darstellen, bei denen der Feinmodulator mit nur einer Negativ-Elektrode auf der gleichen Seite des Lichtleiters wie die längste Elektrode auskommt, dafür aber drei Positiv-Elektroden besitzt.

Für den Fachmann ist ersichtlich, dass sich mit zusätzlichen Elektroden im Feinmodulator die Auflösung weiter steigern lässt - vorausgesetzt ein geeigneter Herstellungsprozess steht zur Verfügung.

Die zur Zeit bestmögliche Elektrodenkombination für einen 12-Bit Modulator mit Basisschrittweite |1| veranschaulicht die Fig. 5, wobei die entsprechenden Bezugshinweise hinsichtlich der Elektroden E0 bis E11 wie bei Fig. 1 gelten und die entsprechenden Elektrodenwerte wieder mit $b_0$ bis $b_{11}$ angegeben sind. Die nachfolgende Tabelle 2 veranschaulicht die zur Zeit bestmögliche Werte- bzw. Längenkombination.

Tabelle 2

| Position | Wert |
|----------|------|
| $b_0$ | 7.00 |
| $b_1$ | -8.00 |
| $b_2$ | -10.00 |
| $b_3$ | 12.00 |

(fortgesetzt)

| Position | Wert |
|----------|------|
| $b_4$ | 16.00 |
| $b_5$ | 32.00 |
| $b_6$ | 64.00 |
| $b_7$ | 128.00 |
| $b_8$ | 256.00 |
| $b_9$ | 512.00 |
| $b_{10}$ | 1024.00 |
| $b_{11}$ | -2033.00 |

Der lineare Ausgangswertebereich mit Schrittweite 1 : ± 2029 wird erreicht mit einem Verhältnis der längsten zur kürzesten Elektrode von 290 : 1. Die Ausgangsdynamik beträgt also ± 2029 : 1 = 11.986 Bit.

Die Fig. 5 veranschaulicht also eine allgemeinere Elektrodenstruktur, bei der der in Fig. 5 wieder links vergrößert herausgezeichnete Feinmodulator nicht symmetrisch ist.

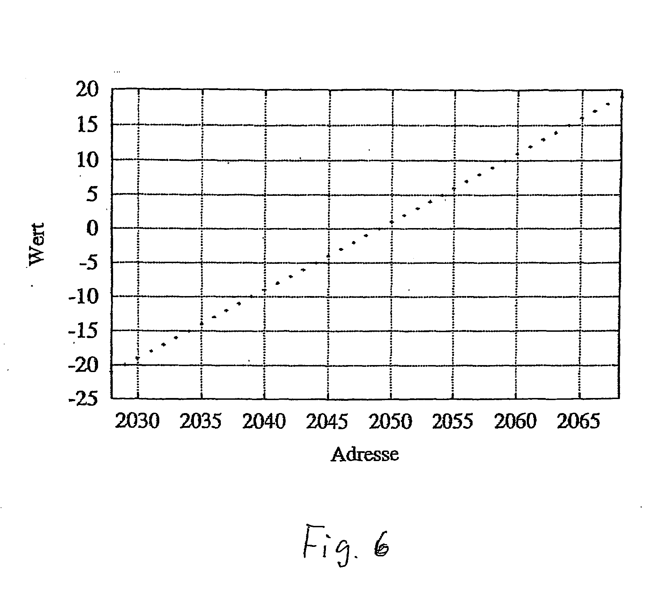

Die Fig. 6 zeigt einen Ausschnitt der Ausgangskennlinie für die optimierten Elektrodenwerte gemäß Tabelle 2. Anders als die Ausschnittdarstellung der Fig. 3 erhält man für diesen Fall eine plateaufreie Kennlinie, wenn der Adressbereich des Wandlers auf die Anzahl der verfügbaren Ausgangszustände beschränkt wird. Soll dagegen der gesamte Adressbereich - in diesem Fall von 12 Bit - zur Ansteuerung ausgeschöpft werden, so entstehen an einigen Stellen der Ausgangskennlinie - ähnlich wie in Fig. 3 veranschaulicht - Plateaus, da z. B. mit der Elektrodenkonfiguration von Tabelle 2 nur 2029 statt 2048 Ausgangszustände je Vorzeichen zusammenhängend verfügbar sind. Die Anzahl der möglichen Plateaus lässt sich aus der Differenz (4096 - "Anzahl der Ausgangszustände") abschätzen. Welche der beiden Möglichkeiten anzuwenden ist, hängt von den jeweiligen Anforderungen ab.

Nachfolgend werden einige Beispiele für unterschiedliche Konfigurationen des Feinmodulators, gegebenenfalls im Zusammenwirken mit dem Grobmodulator gegeben.

Beispiel 1

Ein Beispiel für eine Minimalkonfiguration des Feinmodulators, bei der sich nur eine Elektrode auf der Seite der längsten Elektrode (MSB) des Grobmodulators befindet, verdeutlicht die nachfolgende Tabelle 3.

Tabelle 3

| Position | Wert | Feinmodulator |
|----------|------|---------------|
| $b_0$ | -3.00 | F |
| $b_1$ | 2.00 | |
| $b_2$ | 4.00 | |
| $b_3$ | 8.00 | |
| $b_4$ | 16.00 | |
| $b_5$ | 32.00 | |
| $b_6$ | 64.00 | |
| $b_7$ | 128.00 | |
| $b_8$ | 256.00 | |
| $b_9$ | 512.00 | |
| $b_{10}$ | 1024.00 | |
| $b_{11}$ | -2043.00 | |

Mit dieser Elektrodenkonfiguration lässt sich ein Bereich von 4088 Werten mit Basisschrittweite abdecken, wobei das Verhältnis "Auflösung zu Baulänge" etwa 1:2046 beträgt. Der Hinweis "F" in der Tabelle zeigt an, welche Elektrode des Feinmodulators sich auf der Seite der längsten Elektrode des Grobmodulators befindet.

Beispiel 2

Die nachfolgende Tabelle 4 verdeutlicht ein Beispiel für eine asymmetrische Konfiguration des Feinmodulators. Dabei befindet sich eine Elektrode auf der "negativen" Seite und drei Elektroden des Feinmodulators auf der "positiven" Seite.

Tabelle 4

| Position | Wert | Feinmodulator |
|---|---|---|
| $b_0$ | 7.00 | F |
| $b_1$ | 11.00 | F |
| $b_2$ | 13.00 | F |
| $b_3$ | 15.00 | |
| $b_4$ | -16.00 | F |
| $b_5$ | 30,00 | |
| $b_6$ | 60.00 | |
| $b_7$ | 120.00 | |
| $b_8$ | 240.00 | |
| $b_9$ | 480.00 | |
| $b_{10}$ | 960.00 | |
| $b_{11}$ | -1920.00 | |

Mit dieser Elektrodenkonfiguration lässt sich ein Wertebereich von 3806 Werten jeweils mit Basisschrittweite überdecken. Das Verhältnis "Auflösung zu Baulänge" beträgt etwa 1 : 276.

Beispiel 3

Die folgende Tabelle 5 gibt ein Beispiel für eine Elektrodenkonfiguration mit einem stärker reduzierten Längenverhältnis und einer ungeraden Anzahl no von Elektroden des Feinmodulators.

Tabelle 5

| Position | Wert | Feinmodulator |
|---|---|---|
| $b_0$ | 14.00 | F |
| $b_1$ | -13.00 | F |
| $b_2$ | -15.00 | F |
| $b_3$ | -19.00 | F |
| $b_4$ | 22.00 | F |
| $b_5$ | 30.00 | |
| $b_6$ | 60.00 | |
| $b_7$ | 120.00 | |
| $b_8$ | 240.00 | |
| $b_9$ | 480.00 | |
| $b_{10}$ | 960.00 | |
| $b_{11}$ | -1879.00 | |

Der mit dieser Elektrodenkonfiguration zu überdeckende Bereich beträgt 3744 Werte, jeweils mit Basisschrittweite. Das Verhältnis "Auflösung zu Baulänge" beträgt etwa 1 : 137. Der Hinweis "F" gibt wiederum an, welche Elektroden zum Feinmodulator gehören.

Die Konfiguration von Tabelle 5 ist von besonderem Interesse, da sie die Basis für eine Erweiterung des Phasenmodulators auf z. B. 13 Bit darstellt, welche dann bei einem Längenverhältnis von 272:1 (dies entspricht dem der Konfiguration in Tabelle 2) eine Auflösung von > 12,8 Bit (> 7450 Werte) ermöglicht.

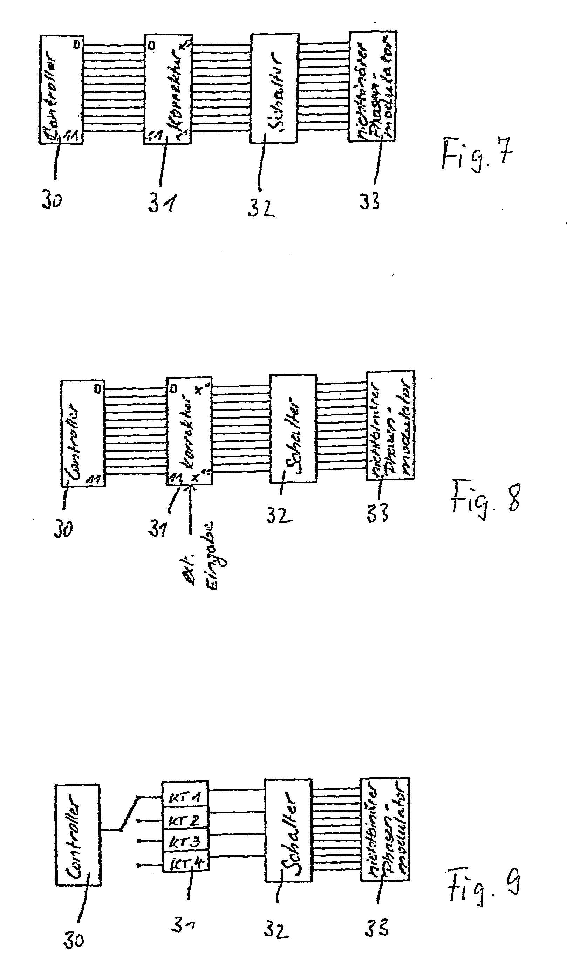

Soweit innerhalb der Ansteuerelektronik für einen erfindungsgemäßen Phasenmodulator binäre Signalverarbeitung vorgesehen ist, was in der Regel der Fall sein wird, ist der Einsatz eines nicht-binären Phasenmodulators gemäß der Erfindung mit Hilfe einer Korrekturtabelle möglich, welche die errechneten Digitalwerte in nicht-binäre Werte umwandelt. Diese Korrekturtabelle kann speicherprogrammierbar ausgelegt werden und kann neben der Umwandlung von binären in nicht-binäre Werte auch herstellungs- oder betriebsbedingte Fehler im Phasenmodulator korrigieren. Die Fig. 7 veranschaulicht den grundsätzlichen Schaltungsaufbau. Von einer Steuereinrichtung (Controller) 30 werden die einem bestimmten Phasenwert entsprechenden Binärwerte einer Umrechungs- oder Korrekturtabelle 31 zugeführt, die einen nachfolgenden Schalter 32 steuert, über den die einzelnen Elektroden E0 bis E11 des Phasenmodulators 33 mit einer dem nicht-binären Wert entsprechenden Signalkombination angesteuert werden.

Die abgewandelte Ausführungsvariante der Umwandlungs- bzw. Korrekturschaltung nach Fig. 8 ermöglicht es, an der Korrekturtabelle ein externes Signal zuzuführen, zum Beispiel ein Temperatursignal oder ein Signal, das alterungsbedingte Änderungen als Nachkorrektur berücksichtigt.

Bei der Umsetz- und Korrekturschaltung nach Fig. 9 sind im dargestellten Beispiel mehrere, zum Beispiel vier Korrekturtabellen KT1 bis KT4 vorgesehen, die in einem ASIC integriert sein können und es ebenfalls ermöglichen, in Abhängigkeit von einem äußeren Signal jeweils eine optimierte Korrekturtabelle zuzuschalten.

Aufgrund der Erfindung ist es möglich, einen digitalen Phasenmodulator mit deutlich erhöhter Auflösung herzustellen, ohne ein Längenverhältnis fordern zu müssen, das beispielsweise einem Wert von $1:2^{12}$ entspricht. Daraus ergeben sich erhebliche technologische Vorteile.

Die gemeinsamen Ideen aller möglichen Elektrodenkonfigurationen gemäß der Erfindung sind

1. die Aufteilung in einen binären und in einen nicht-binären Modulatorteil, und

2. die Erzeugung der Feinabstufung durch Differenzbildung von Elektrodenwerten, wodurch die kürzeste Elektrode des Modulators nicht die Auflösung begrenzt.

**Patentansprüche**

**1.** Verfahren zur Erhöhung der Auflösung eines digitalen Phasenmodulators für eine faseroptische Signalübertragungs- oder Messeinrichtung, der mit einer vorgegebenen Gesamtanzahl m von parallel und beidseitig zu einer Lichtführungsstrecke in oder auf einem optischen Substrat angeordneten positiven bzw. negativen Elektroden unterschiedlicher Längen ausgestattet ist, die mit vorzugsweise gleichen Steuerpotenzialen beaufschlagt werden, welche, je nach Lage der Elektroden zur Lichtführungsstrecke, eine positive oder negative Verschiebung der Lichtphase am Ausgang des Modulators bewirken, wobei durch wechselnde Ansteuerwahl und Kombinationen von positiv und negativ wirkenden Elektroden innerhalb eines vorgegebenen Wertebereichs eine Vielzahl von Phasenwerten eingestellt werden,
**dadurch gekennzeichnet, dass**

- die Gesamtzahl m von Elektroden in zwei Gruppen aufgeteilt wird, wobei

-- aus einer ersten Gruppe n von Elektroden ein Grobmodulator mit binär und in ihrem Beitrag zur Lichtphasenverschiebung höher signifikant gewichteten Elektroden mit einem Längenverhältnis von $b_{n+1} : b_n = 2$ gebildet wird, und

-- aus einer zweiten Gruppe von $n_0$ nicht-binär und in ihrem Beitrag zur Lichtphasenverschiebung niedriger signifikant gewichteter Elektroden ein Feinmodulator gebildet wird, wobei auf der Seite der längsten Elektrode (E11) des Grobmodulators mindestens eine Elektrode dieses Feinmodulators plaziert wird, und wobei

- die Längen und damit Gewichtungen auf die Lichtphasenverschiebung der auf unterschiedlichen Seiten des Feinmodulators angeordneten Elektroden einerseits größer gewählt werden als die Auflösung (Basisschrittweite) des Gesamtmodulators und andererseits die kleinsten Phasenmodulationsschritte durch gleichzeitige Ansteuerung von positiven und negativen Elektroden des Feinmodulators bzw. des Feinmodulators und des Grobmodulators erzeugt werden.

2. Verfahren nach Anspruch 1, **dadurch gekennzeichnet, dass** der dem Ausgangswertebereich der Lichtphasenverschiebung als kleinste Schrittweite (Basisschrittweite) des Wertebereichs zugeordnete Wert ($|1|$) durch gleichzeitige Ansteuerung von über die Lichtführungsstrecke (L) einander gegenüberstehenden Elektroden der zweiten Anzahl no von Elektroden des Feinmodulators generiert wird.

3. Verfahren nach Anspruch 1, **dadurch gekennzeichnet, dass** die Anzahl von Elektroden des Grobmodulators zu $n = 8$ gewählt wird, wobei die längste dieser ersten Gruppe von Elektroden (Position $b_{11}$) auf der einen und alle weiteren (Positionen $b_4$ bis $b_{10}$) auf der anderen Seite der Lichtführungsstrecke angeordnet werden.

4. Verfahren nach Anspruch 3, **dadurch gekennzeichnet, dass** die Anzahl der Elektroden des Feinmodulators zu $no = 4$ gewählt wird, wobei die kürzeste (Position $b_0$) sowie die längste (Position $b_3$) dieser zweiten Gruppe von Elektroden auf der einen Seite des Grobmodulators und die beiden mittleren (Positionen $b_1$, $b_2$) dieser zweiten Gruppe von Elektroden auf der anderen Seite des Grobmodulators angeordnet werden.

5. Verfahren nach Anspruch 3, **dadurch gekennzeichnet, dass** die Anzahl der Elektroden des Feinmodulators zu $no = 4$ gewählt wird, wobei die kürzeste (Position $b_0$) sowie die längste (Position $b_3$) dieser zweiten Gruppe von Elektroden auf der Seite der weiteren Elektroden (Positionen $b_4$ bis $b_{10}$) des Grobmodulators und die beiden mittleren (Positionen $b_1$, $b_2$) dieser zweiten Gruppe von Elektroden auf der Seite der längsten Elektrode (E11) des Grobmodulators angeordnet werden.

6. Verfahren nach Anspruch 4, **dadurch gekennzeichnet, dass** der zweiten Gruppe von Elektroden des Feinmodulators durch entsprechende Länge und Positionierung folgende Werte des Wertebereichs zugeordnet werden:

kürzester Elektrodenwert (Position $b_0$) = 7.
höchster Elektrodenwert (Position $b_3$) = 10,
kleinerer der mittleren Elektrodenwerte (Position $b_1$) = -8.
größerer der mittleren Elektrodenwerte (Position $b_2$) = -9 und dass der ersten Gruppe von Elektroden (E4 bis E10) des Grobmodulators durch entsprechende Länge und Positionierung folgende Werte des Wertebereichs zugeordnet werden:
binärer Grundwert der kürzesten Elektrode (Position $b_4$) $b_n$ = 13.
Werte der folgenden sechs Elektroden (Positionen $b_5$ bis $b_{10}$)
$b_{n+1} : b_n = 2$ und
Wert der längsten Elektrode (E11) (Position $b_{11}$) = -1652.

7. Verfahren nach Anspruch 5, **dadurch gekennzeichnet, dass** der zweiten Gruppe von Elektroden des Feinmodulators durch entsprechende Länge und Positionierung folgende Werte des Wertebereichs zugeordnet werden:

kürzester Elektrodenwert (Position $b_0$) = 7,
höchster Elektrodenwert (Position $b_3$) = 12.
kleinerer der mittleren Elektrodenwerte (Position $b_1$) = -8.
größerer der mittleren Elektrodenwerte (Position $b_2$) = -10. und dass der ersten Gruppe von Elektroden (E4 bis E10) des Grobmodulators durch entsprechende Länge und Positionierung folgende Werte des Wertebereichs zugeordnet werden:
binärer Grundwert der kürzesten Elektrode (Position $b_4$) $b_n$ = 16,
Werte der folgenden sechs Elektroden (Positionen $b_5$ bis $b_{10}$)
$b_{n+1} : b_n = 2$ und
Wert der längsten Elektrode (E11) (Position $b_{11}$) = -2033.

8. Digitaler Phasenmodulator für eine faseroptische Signalübertragungs- oder Messeinrichtung, der eine Gesamtzahl m von parallel und beidseitig zu einer Lichtführungsstrecke (L) in oder auf einem optischen Substrat angeordneter positiver bzw. negativer Elektroden unterschiedlicher Längen aufweist, wobei die Elektroden zu beiden Seiten der Lichtführungsstrecke mit vorzugsweise gleichen, aus entgegengesetzten Feldstärken bewirkten Steuerpotenzialen beaufschlagbar sind, derart, dass durch wechselnde Kombinationen von positiven und negativen Elektroden innerhalb eines vorgegebenen Wertebereichs eine Vielzahl von Phasenwerten einstellbar ist,
**gekennzeichnet durch**

- eine erste Gruppe von Elektroden (E4 bis E11), die einen Grobmodulator mit n binär und höher signifikant gewichteter Elektroden mit einem Längenverhältnis $b_{n+1} : b_n$ von etwa 2 bildet, mit n < m: m = Gesamtanzahl aller Elektroden, wobei jedoch die Länge der längsten Elektrode (E11) der Längensumme aller übrigen Elektroden (E0 bis E10) des Gesamtmodulators mit einem Gewichtungswert von

$$b_{m\text{-}1} = \sum_{i=0}^{m-2} b_i$$

entspricht;
- eine zweite Gruppe von $n_0$ nicht-binär und in ihrem Beitrag zur Lichtphasenverschiebung niedriger signifikant gewichteter Elektroden, die einen Feinmodulator bildet, wobei gilt n+no = m; $n_0$<n:
- eine relative Länge und Anordnung der zweiten Gruppe von no Elektroden längs der Lichtführungsstrecke (L) derart, dass sich einerseits bei keiner möglichen Elektrodenkombination Phasenwerte-Auslöschung ergibt, und andererseits das Verhältnis der kleinsten zur größten Elektrodenlänge für eine **durch** die Gesamtanzahl m von Elektroden gegebenen Auflösung von annähernd $1:2^{-m}$ möglichst groß ist.

9. Phasenmodulator nach Anspruch 8, **dadurch gekennzeichnet, dass** die längste (E11) der ersten Gruppe von n Elektroden des Grobmodulators auf der einen und alle übrigen dieser Gruppe auf der anderen Seite längs der Lichtführungsstrecke (L) angeordnet sind.

10. Phasenmodulator nach Anspruch 8, **dadurch gekennzeichnet, dass** die Längen der Elektroden so gewählt sind, dass sich durch Summen- bzw. Differenzbildung von Elektrodenlängen ein vorgegebener, einer linearen Kennlinie folgender Ausgangswertebereich der Phase eines Signals auf der Lichtführungsstrecke ergibt, dessen Auflösung größer ist als das Verhältnis der kleinsten Elektrodenlänge zur Gesamtlänge des Phasenmodulators auf dem Trägermaterial.

11. Phasenmodulator nach Anspruch 9. **dadurch gekennzeichnet, dass** die kleinste Schrittweite des Ausgangswertebereichs der Phase durch die kleinste Längendifferenz zwischen positiven Elektroden auf der einen und negativen Elektroden auf der anderen Seite der Lichtführungsstrecke bestimmt ist.

12. Phasenmodulator nach Anspruch 8, **dadurch gekennzeichnet, dass** sich wenigstens zwei auf gegenüberliegenden Seiten längs der Lichtführungsstrecke angeordnete Elektroden (E1, E2) des Feinmodulators in ihrem Wirkungsbereich auf eine auf der Lichtführungsstrecke laufende Lichtwelle partiell überlappen, während wenigstens zwei andere daran anschließend angeordnete Elektroden (E0. E3) des Feinmodulators hinsichtlich ihres Wirkungsbereichs auf die Lichtwelle gegeneinander versetzt sind, wobei die kleinste Auflösung (Basis-Schrittweite) durch die Längendifferenz der sich überlappenden Elektroden bestimmt ist.

13. Phasenmodulator nach Anspruch 8, **dadurch gekennzeichnet, dass** das Verhältnis der kleinsten zur größten Elektrodenlänge bei vorgegebener Länge der größten Elektrode des Phasenmodulators etwa $1:2^{-9}$ beträgt.

14. Phasenmodulator nach Anspruch 13, **dadurch gekennzeichnet, dass** die Anzahl der Elektroden des Grobmodulators n = 8 und die Anzahl der Elektroden des Feinmodulators $n_0$ = 4 beträgt und die Auswahl der Längen der Elektroden (E0 bis E11) an Positionen $b_0$ bis $b_{11}$ so getroffen ist, dass sich eine Auflösung > 11 Bit ergibt.

15. Phasenmodulator nach Anspruch 13, **dadurch gekennzeichnet, dass** die relativen Längen der vier Elektroden des Feinmodulators (E0 bis E3) so gewählt sind, dass an ihnen zugeordneten Positionen $b_0$ bis $b_3$ auf der Seite der längsten Elektrode (E11) des Grobmodulators mit der Position $b_{11}$ die Werte $b_1$ = -8 bzw. $b_2$ = -9 und auf der gegenüberliegenden Seite der Lichtführungsstrecke die Werte $b_0$ = 7 und $b_3$ = 10 festgelegt sind.

16. Phasenmodulator nach Anspruch 14, **dadurch gekennzeichnet, dass** die relativen Längen der Elektroden des Grobmodulators so gewählt sind, dass die Gewichtung seiner binär gewichteten Elektroden (E4 bis E10) auf die Lichtphasenverschiebung mit dem Wert $b_4$ = 13 beginnt, mit dem Wert $b_{10}$ = 832 endet, und dass der längsten Elektrode (E11) der Wert $b_{11}$ = -1652 zugeordnet ist, und dass die maximale Auflösung 11,7 Bit beträgt.

17. Phasenmodulator nach Anspruch 14, **dadurch gekennzeichnet, dass** die relativen Längen der vier Elektroden des Feinmodulators (E0 bis E3) so gewählt sind, dass an ihnen zugeordneten Positionen $b_0$ bis $b_3$ auf der Seite der längsten Elektrode (E11) des Grobmodulators mit der Position $b_{11}$ die Werte $b_1$ = -8 bzw, $b_2$ = -10 und auf der gegenüberliegenden Seite der Lichtführungsstrecke die Werte $b_0 = 7$ und $b_3 = 12$ festgelegt sind.

18. Phasenmodulator nach Anspruch 17, **dadurch gekennzeichnet, dass** die relativen Längen der Elektroden des Grobmodulators so gewählt sind, dass die Gewichtung seiner binärgewichteten Elektroden (E4 bis E10) auf die Lichtphasenverschiebung mit dem Wert $b_4 = 16$ beginnt, mit dem Wert $b_{10} = 1024$ endet, und dass der längsten Elektrode (E11) der Wert $b_{11} = -2033$ zugeordnet ist, und dass die maximale Auflösung 11.986 Bit beträgt.

**Claims**

1. A method for increasing the resolution of a digital phase modulator for a fiber-optic signal transmission or measuring device, the modulator being equipped with a predetermined total number m of positive and negative electrodes having different lengths which are arranged parallel to and on both sides of a light guiding path in or on an optical substrate and to which preferably identical control potentials can be applied, which effect a positive or negative shift in the light phase at the output of the modulator depending on the position of the electrodes with respect to the light guiding path, wherein a multiplicity of phase values is being set by varying the choice of driving and combinations of positively and negatively acting electrodes within a predetermined value range,
**characterized in that**

    - the total number m of electrodes is divided into two groups, wherein

        -- from a first group n of electrodes a coarse modulator with binary and with respect to their contribution to the shift in the light phase more significant weighted electrodes with a length ratio of $b_{n+1} : bn \approx 2$ is formed, and
        -- from a second group of no non-binary and with respect to their contribution to the shift in the light phase less significant weighted electrodes a fine modulator is formed, wherein at least one electrode of said fine modulator being positioned on the side of the longest electrode (E11) of the coarse modulator, and wherein

    - on the one hand, the lengths and thus weightings on the shift in light phase of the electrodes arranged on different sides of the fine modulator are selected to be larger than the resolution (basic step size) of the overall modulator and, on the other hand, the smallest phase modulation steps are generated by simultaneously driving of positive and negative electrodes of the fine modulator or of the fine modulator and of the coarse modulator.

2. The method as claimed in claim 1, **characterized in that** the value ($|1|$) assigned to the output value range of the shift in light phase as the smallest step size (basic step size) of the value range is generated by simultaneously driving of electrodes of the second number no of electrodes of the fine modulator situated opposite to one another via the light guiding path (L).

3. The method as claimed in claim 1, **characterized in that** the number of electrodes of the coarse modulator is chosen to be n = 8, the longest of said first group of electrodes (position $b_{11}$) being arranged on one and all further ones (positions $b_4$ to $b_{10}$) on the other side of the light guiding path.

4. The method as claimed in claim 3, **characterized in that** the number of electrodes of the fine modulator is chosen to be no = 4, the shortest (position $b_0$) and the longest (position $b_3$) of said second group of electrodes being arranged on one side of the coarse modulator and the two middle ones (positions $b_1$, $b_2$) of said second group of electrodes being arranged on the other side of the coarse modulator.

5. The method as claimed in claim 3, **characterized in that** the number of electrodes of the fine modulator is chosen to be no = 4, the shortest (position $b_0$) and the longest (position $b_3$) of said second group of electrodes being arranged on the side of the further electrodes (positions $b_4$ to $b_{10}$) of the coarse modulator and the two middle ones (positions $b_1$, $b_2$) of said second group of electrodes being arranged on the side of the longest electrode (E11) of the coarse modulator.

6. The method as claimed in claim 4, **characterized in that** the second group of electrodes of the fine modulator, through corresponding length and positioning, is assigned the following values of the value range:

    smallest electrode value (position $b_0$) = 7,
    largest electrode value (position $b_3$) =10.
    smaller one of the middle electrode values (position $b_1$) = -8,

larger one of the middle electrode values (position $b_2$) = -9 and **in that** the first group of electrodes (E4 to E10) of the coarse modulator, through corresponding length and positioning, is assigned the following values of the value range:
binary base value of the shortest electrode (position $b_4$) $b_n$ = 13, values of the following six electrodes (positions $b_5$ to $b_{10}$) $b_{n+1}$:$b_n$ = 2, and
value of the longest electrode (E11) (position $b_{11}$) = -1652.

**7.** The method as claimed in claim 5, **characterized in that** the second group of electrodes of the fine modulator, through corresponding length and positioning, is assigned the following values of the value range:

smallest electrode value (position $b_0$) = 7,
largest electrode value (position $b_3$) = 12,
smaller one of the middle electrode values (position $b_1$) = -8,
larger one of the middle electrode values (position $b_2$) = -10 and **in that** the first group of electrodes (E4 to E10) of the coarse modulator, through corresponding length and positioning, is assigned the following values of the value range:
binary base value of the shortest electrode (position $b_4$) $b_n$ = 16, values of the following six electrodes (positions $b_5$ to $b_{10}$) $b_{n+1}$:$b_n$ = 2, and
value of the longest electrode (E11) (position $b_{11}$) = -2033.

**8.** A digital phase modulator for a fiber-optic signal transmission or measuring device, the digital phase modulator having a total number m of positive and negative electrodes having different lengths which are arranged parallel and on both sides of a light guiding path (L) in or on an optical substrate, it being possible to apply preferably identical control potentials effected from opposite field strengths to the electrodes to both sides of the light guiding path in such a way that a multiplicity of phase values can be set by varying combinations of positive and negative electrodes within a predetermined value range,
**characterized by**

- a first group of electrodes (E4 to E11) which forms a coarse modulator with n binary and more significant weighted electrodes with a length ratio $b_{n+1}$:$b_n$ of approximately 2, where n < m; m = total number of all electrodes, wherein however the length of the longest electrode (E11) corresponds to the sum of lengths of all remaining electrodes (E0 to E10) of the overall modulator with a weighting value of

$$b_{m-1} = \sum_{i=0}^{m-2} b_i$$

- a second group of no non-binary and with respect to their contribution to the shift in the light phase less significant weighted electrodes, which forms a fine modulator, where $n+n_0 = m$; $n_0 < n$;
- a relative length and arrangement of the second group of no electrodes along the light guiding path (L) in such a way that, on the one hand, no possible electrode combination results in phase value cancellation, and, on the other hand, the ratio of the smallest to the largest electrode length is as large as possible for a resolution of approximately $1:2^{-m}$ given by the total number m of electrodes.

**9.** The phase modulator as claimed in claim 8, **characterized in that** the longest one (E11) of the first group of n electrodes of the coarse modulator is arranged on one side and all remaining ones of this group are arranged along the other side the light guiding path (L).

**10.** The phase modulator as claimed in claim 8, **characterized in that** the lengths of the electrodes are chosen such that forming the sum of or difference between electrode lengths results in a predetermined output value range of the phase of a signal on the light guiding path- following a linear characteristic curve - the resolution of which being larger than the ratio of the smallest electrode length to the total length of the phase modulator on the carrier material.

**11.** The phase modulator as claimed in claim 9, **characterized in that** the smallest step size of the output value range of the phase is determined by the smallest difference in length between positive electrodes on one side and negative electrodes on the other side of the light guiding path.

12. The phase modulator as claimed in claim 8, **characterized in that** at least two electrodes (E1, E2) of the fine modulator that are arranged on opposite sides along the light guiding path partially overlap in their region of effect on a light wave running on the light guiding path, while at least two other electrodes (E0, E3) of the fine modulator that are arranged following thereto are offset to one another with regard to their region of effect on the light wave, the smallest resolution (basic step size) being determined by the difference in length of the overlapping electrodes.

13. The phase modulator as claimed in claim 8, **characterized in that** the ratio of the smallest to the largest electrode length is approximately $1:2^{-9}$ given a predetermined length of the largest electrode of the phase modulator.

14. The phase modulator as claimed in claim 13, **characterized in that** the number of electrodes of the coarse modulator is n = 8 and the number of electrodes of the fine modulator is no = 4, and the selection of the lengths of the electrodes (E0 to E11) at positions $b_0$ to $b_{11}$ is made such that it results in a resolution >11 bits.

15. The phase modulator as claimed in claim 13, **characterized in that** the relative lengths of the four electrodes of the fine modulator (E0 to E3) are chosen, such that the values $b_1$ = -8 and $b_2$ = -9 are determined at their assigned positions $b_0$ to $b_3$, on the side of the longest electrode (E11) of the coarse modulator with the position $b_{11}$, and the values $b_0$ = 7 and $b_3$ = 10 are determined on the opposite side of the light guiding path.

16. The phase modulator as claimed in claim 14, **characterized in that** the relative lengths of the electrodes of the coarse modulator are chosen such that the weighting of its binary weighted electrodes (E4 to E10) on the shift in light phase begins with the value $b_4$ = 13 and ends with the value $b_{10}$ = 832, and **in that** the value $b_{11}$ = -1652 is assigned to the longest electrode (E11), and **in that** the maximum resolution is 11,7 bits.

17. The phase modulator as claimed in claim 14, **characterized in that** the relative lengths of the four electrodes of the fine modulator (E0 to E3) are chosen, such that the values $b_1$ = -8 and $b_2$ = -10 are determined at their assigned positions $b_0$ to $b_3$, on the side of the longest electrode (E11) of the coarse modulator with the position $b_{11}$, and the values $b_0$ = 7 and $b_3$ = 12 are determined on the opposite side of the light guiding path.

18. The phase modulator as claimed in claim 17, **characterized in that** the relative lengths of the electrodes of the coarse modulator are chosen such that the weighting of the binary weighted electrodes (E4 to E10) on the shift in light phase begins with the value $b_4$ = 16 and ends with the value $b_{10}$ = 1024, and **in that** the value $b_{11}$ = -2033 is assigned to the longest electrode (E11), and **in that** the maximum resolution is 11,986 bits.

**Revendications**

1. Procédé pour augmenter la résolution d'un modulateur de phase numérique pour un dispositif de transmission de signaux ou de mesure à fibres optiques équipé d'un nombre total prédéfini m d'électrodes positives et négatives de différentes longueurs qui sont disposées parallèlement et des deux côtés d'une trajectoire de lumière dans ou sur un substrat optique et qui sont aptes à être sollicitées par des potentiels de commande de préférence égaux qui, suivant la position des électrodes par rapport à la trajectoire de lumière, provoquent un déplacement positif ou négatif de la phase de lumière à la sortie du modulateur, étant précisé que grâce à un choix de commande et à des combinaisons alternés d'électrodes à action positive et négative, un grand nombre de valeurs de phase est réglé à l'intérieur d'une plage de valeurs prédéfinie,
   **caractérisé en ce que**

   - le nombre total m d'électrodes est divisé en deux groupes, étant précisé

      -- qu'à partir d'un premier groupe de n électrodes est formé un modulateur grossier avec des électrodes à pondération binaire et plus significatives par leur contribution au déphasage lumineux, et à rapport de longueurs $b_{n+1}:b_n = 2$,
      -- qu'un modulateur fin est formé à partir d'un second groupe de $n_0$ électrodes à pondération non binaire et moins significatives par leur contribution au déphasage lumineux, au moins une électrode de modulateur fin étant placée du côté de l'électrode la plus longue (E11) du modulateur grossier, et

   - les longueurs et, ainsi, les pondérations sur le déphasage lumineux des électrodes disposées sur des côtés différents du modulateur fin sont choisies pour être plus grandes que la résolution (pas de base) du modulateur total, d'une part, et les pas de modulation de phase les plus petits sont produits grâce à la commande simultanée d'électrodes positives et négatives du modulateur fin ou du modulateur fin et du modulateur grossier, d'autre part.

2. Procédé selon la revendication 1, **caractérisé en ce que** la valeur ($|1|$) associée à la plage de valeurs de départ du déphasage lumineux comme pas le plus petit (pas de base) de la plage de valeurs est générée grâce à la commande simultanée d'électrodes opposées, sur la trajectoire de lumière (L) du second groupe de $n_0$ électrodes du modulateur fin.

3. Procédé selon la revendication 1, **caractérisé en ce qu'**on choisit comme nombre d'électrodes du modulateur grossier n=8, la plus longue de ce premier groupe d'électrodes (position $b_{11}$) étant disposée d'un côté de la trajectoire de lumière tandis que toutes les autres (positions $b_4$ à $b_{10}$) sont disposées de l'autre côté de la trajectoire de lumière.

4. Procédé selon la revendication 3, **caractérisé en ce qu'**on choisit comme nombre d'électrodes du modulateur fin $n_0$=4, la plus courte (position $b_0$) et la plus longue (position $b_3$) de ce second groupe d'électrodes étant disposées d'un côté du modulateur grossier tandis que les deux électrodes moyennes (positions $b_1$, $b_2$) de ce second groupe d'électrodes sont disposées de l'autre côté du modulateur grossier.

5. Procédé selon la revendication 3, **caractérisé en ce qu'**on choisit comme nombre d'électrodes du modulateur fin $n_0$=4, la plus courte (position $b_0$) et la plus longue (position $b_3$) de ce second groupe d'électrodes étant disposées du côté des autres électrodes (positions $b_4$ à $b_{10}$) du modulateur grossier tandis que les deux électrodes moyennes (positions $b_1$, $b_2$) de ce second groupe d'électrodes sont disposées du côté de la plus longue électrode (E11) du modulateur grossier.

6. Procédé selon la revendication 4, **caractérisé en ce que** les valeurs suivantes de la plage de valeurs sont associées au second groupe d'électrodes du modulateur fin, grâce à une longueur et à un positionnement correspondants :

    valeur d'électrode la plus courte (position $b_0$)=7,
    valeur d'électrode la plus haute (position $b_3$)=10,
    la plus petite des valeurs d'électrodes moyennes (position $b_1$)=-8
    la plus grande des valeurs d'électrodes moyennes (position $b_2$)=-9

    et **en ce que** les valeurs suivantes de la plage de valeurs sont associées au premier groupe d'électrodes (E4 à E10) du modulateur grossier grâce à une longueur et à un positionnement correspondants :

    valeur de base binaire de l'électrode la plus courte (position $b_4$) $b_n$=13,
    valeurs des six électrodes suivantes (positions $b_5$ à $b_{10}$) $b_{n+1}$:$b_n$=2 et
    valeur de l'électrode la plus longue (E11) (position $b_{11}$)=-1652.

7. Procédé selon la revendication 5, **caractérisé en ce que** les valeurs suivantes de la plage de valeurs sont associées au second groupe d'électrodes du modulateur fin, grâce à une longueur et à un positionnement correspondants :

    valeur d'électrode la plus courte (position $b_0$)=7,
    valeur d'électrode la plus haute (position $b_3$)=12,
    la plus petite des valeurs d'électrodes moyennes (position $b_1$)=-8
    la plus grande des valeurs d'électrodes moyennes (position $b_2$)=-10

    et **en ce que** les valeurs suivantes de la plage de valeurs sont associées au premier groupe d'électrodes (E4 à E10) du modulateur grossier grâce à une longueur et à un positionnement correspondants :

    valeur de base binaire de l'électrode la plus courte (position $b_4$) $b_n$=16,
    valeurs des six électrodes suivantes (positions $b_5$ à $b_{10}$) $b_{n+1}$:$b_n$=2 et
    valeur de l'électrode la plus longue (E11) (position $b_{11}$)=-2033.

8. Modulateur de phase numérique pour un dispositif de transmission de signaux ou de mesure à fibres optiques qui comporte un nombre total m d'électrodes positives et négatives de différentes longueurs qui sont disposées parallèlement et des deux côtés d'une trajectoire de lumière (L) dans ou sur un substrat optique, les électrodes prévues des deux côtés de la trajectoire de lumière étant aptes à être sollicitées par des potentiels de commande de préférence égaux, provoqués par des intensités de champ opposées, de telle sorte que grâce à des combinaisons alternées d'électrodes positives et négatives un grand nombre de valeurs de phase peut être réglé à l'intérieur d'une plage de valeurs prédéfinie,
**caractérisé par**

- un premier groupe d'électrodes (E4 à E11) qui forme un modulateur grossier avec n électrodes à pondération binaire et plus significatives, avec un rapport de longueurs $b_{n+1}:b_n$ d'environ 2, avec n<m ; m=nombre total de toutes les électrodes, étant précisé toutefois que la longueur de l'électrode la plus longue (E11) correspond à la somme des longueurs de toutes les autres électrodes (E0 à E10) du modulateur total avec une valeur de pondération

$$b_{m-1} = \sum_{i=0}^{m-2} b_i$$

- un second groupe de $n_0$ électrodes à pondération non binaire et moins significatives par leur contribution au déphasage lumineux, qui forme un modulateur fin, avec $n+n_0=m$ ; no<n ;
- une longueur et une disposition relatives du second groupe de $n_0$ électrodes le long de la trajectoire de lumière (L) qui sont telles que d'une part il n'y a une extinction des valeurs de phase avec aucune combinaison d'électrodes possibles, et que d'autre part le rapport de la plus petite sur la plus grande longueur d'électrode est aussi grand que possible pour une résolution d'environ $1:2^{-m}$ définie par le nombre total m d'électrodes.

9. Modulateur de phase selon la revendication 8, **caractérisé en ce que** la plus longue (E11) du premier groupe de n électrodes du modulateur grossier est disposée d'un côté de la trajectoire de lumière (L), tandis que toutes les autres de ce groupe sont disposées de l'autre côté.

10. Modulateur de phase selon la revendication 8, **caractérisé en ce que** les longueurs des électrodes sont choisies de telle sorte que la formation d'une somme ou d'une différence de longueurs d'électrodes donne une plage de valeurs de départ prédéfinie à courbe caractéristique linéaire pour la phase d'un signal sur la trajectoire de lumière, dont la résolution est supérieure au rapport de la plus petite longueur d'électrode sur la longueur totale du modulateur de phase sur le matériau de support.

11. Modulateur de phase selon la revendication 9, **caractérisé en ce que** le plus petit pas de la plage de valeurs de départ de la phase est défini par la plus petite différence de longueur entre les électrodes positives, d'un côté de la trajectoire de lumière, et les électrodes négatives, de l'autre côté de celle-ci.

12. Modulateur de phase selon la revendication 8, **caractérisé en ce qu'**au moins deux électrodes (E1, E2) du modulateur fin qui sont disposées sur des côtés opposés, le long de la trajectoire de lumière, se recouvrent partiellement dans leur zone d'action sur une onde lumineuse qui suit ladite trajectoire de lumière, tandis qu'au moins deux autres électrodes (E0, E3) du modulateur fin qui sont disposées à la suite des premières (E1, E2) sont décalées l'une par rapport à l'autre pour leur zone d'action sur l'onde lumineuse, la plus petite résolution (pas de base) étant définie par la différence de longueur des électrodes qui se recouvrent.

13. Modulateur de phase selon la revendication 8, **caractérisé en ce que** le rapport de la plus petite sur la plus grande longueur d'électrode, pour une longueur prédéfinie de la plus grande électrode du modulateur de phase, est d'environ $1:2^{-9}$.

14. Modulateur de phase selon la revendication 13, **caractérisé en ce que** le nombre d'électrodes du modulateur grossier est n=8 et le nombre d'électrodes du modulateur fin est $n_0=4$, et le choix des longueurs des électrodes (E0 à E11) au niveau des positions $b_0$ à $b_{11}$ est fait de manière à donner une résolution >11 bits.

15. Modulateur de phase selon la revendication 13, **caractérisé en ce que** les longueurs relatives des quatre électrodes du modulateur fin (E0 à E3) sont choisies pour que les valeurs $b_1=-8$, $b_2=-9$ soient fixées au niveau de positions $b_0$ à $b_3$ associées à ces électrodes, du côté de la plus longue électrode (E11) du modulateur grossier avec la position $b_{11}$, et les valeurs $b_0=7$ et $b_3=10$ sur le côté opposé de la trajectoire de lumière.

16. Modulateur de phase selon la revendication 14, **caractérisé en ce que** les longueurs relatives des électrodes du modulateur grossier sont choisies pour que la pondération de ses électrodes à pondération binaire (E4 à E10) sur le déphasage lumineux commence avec la valeur $b_4=13$ et finisse avec la valeur $b_{10}=832$, et **en ce que** la valeur

$b_{11}$=-1652 est attribuée à la plus longue électrode (E11), et **en ce que** la résolution maximale est de 11,7 bits.

**17.** Modulateur de phase selon la revendication 14, **caractérisé en ce que** les longueurs relatives des quatre électrodes du modulateur fin (E0 à E3) sont choisies pour que les valeurs $b_1$=-8, $b_2$=-10 soient fixées au niveau de positions $b_0$ à $b_3$ associées à ces électrodes, du côté de la plus longue électrode (E11) du modulateur grossier avec la position $b_{11}$, et les valeurs $b_0$=7 et $b_3$=12 sur le côté opposé de la trajectoire de lumière.

**18.** Modulateur de phase selon la revendication 17, **caractérisé en ce que** les longueurs relatives des électrodes du modulateur grossier sont choisies pour que la pondération de ses électrodes à pondération binaire (E4 à E10) sur le déphasage lumineux commence avec la valeur $b_4$=16 et finisse avec la valeur $b_{10}$=1024, et **en ce que** la valeur $b_{11}$=-2033 est attribuée à la plus longue électrode (E11), et **en ce que** la résolution maximale est de 11,986 bits.

Fig. 1

Fig. 2

Fig. 3

Fig. 4

Fig. 5

Fig. 6

Fig. 7

30    31    32    33

Fig. 8

30    31    32    33

ext. Eingabe

Fig. 9

Controller    KT 1
              KT 2
              KT 3
              KT 4

Schalter    nichtbinärer Phasen-modulator

30    31    32    33

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19753427 C1